(19) Europäisches Patentamt

European Patent Office

Office européen des brevets

(11) Veröffentlichungsnummer: **0 277 650**
**B1**

(12) **EUROPÄISCHE PATENTSCHRIFT**

(45) Veröffentlichungstag der Patentschrift:
**16.08.90**

(51) Int. Cl.⁵: **B60G 7/02**, B60G 3/26

(21) Anmeldenummer: **88101547.3**

(22) Anmeldetag: **03.02.88**

(54) **Radaufhängung für Hinterräder von mit Vorderradlenkung ausgestatteten Kraftfahrzeugen, insbesondere Personenkraftwagen.**

(30) Priorität: **03.02.87 DE 3703198**

(43) Veröffentlichungstag der Anmeldung:
**10.08.88 Patentblatt 88/32**

(45) Bekanntmachung des Hinweises auf die Patenterteilung:
**16.08.90 Patentblatt 90/33**

(84) Benannte Vertragsstaaten:
**DE FR GB IT SE**

(56) Entgegenhaltungen:
**EP-A- 0 096 372**
**EP-A- 0 193 090**
**FR-A- 2 511 329**
**GB-A- 2 170 453**
**JP-A-60 197 413**
**JP-A-62 018 309**

(73) Patentinhaber: **Bayerische Motoren Werke Aktiengesellschaft, Patentabteilung AJ-30 Postfach 40 02 40 Petuelring 130, D-8000 München 40(DE)**

(72) Erfinder: **Müller, Rudolf, Dipl.-Ing., Thomas-Schwarz-Strasse 43, D-8060 Dachau(DE)**
Erfinder: **Strasser, Ludwig, Ing.grad., Ulrichstrasse 4a, D-8017 Ebersberg(DE)**

(74) Vertreter: **Draeger, Karlfried et al, Bayerische Motoren Werke Aktiengesellschaft Postfach 40 02 40 Petuelring 130 - AJ 36, D-8000 München 40(DE)**

ACTORUM AG

**Beschreibung**

Die Erfindung betrifft eine Radaufhängung für Hinterräder von mit Vorderradlenkung ausgestatteten Kraftfahrzeugen, insbesondere Personenkraftwagen, nach dem Oberbegriff des Patentanspruchs 1.

Aus der EP-A 193 090 ist eine insbesondere für angetriebene Hinterräder geeignete Radaufhängung dieser Art bekannt, bei der bei einer Anordnung mit zwei unteren Querlenkern der hintere die als Schraubenfeder ausgebildete Tragfeder und einen Stoßdämpfer abstützt, bei einer Anordnung mit zwei oberen Querlenkern jedoch nicht ersichtlich ist, wo sich die Tragfeder abstützt. Die bekannte Radaufhängung weist einen nach vorne ragenden Längslenker auf, der an seinem vorderen Ende in Fahrzeuglängsrichtung elastisch nachgiebig an dem Fahrzeugaufbau befestigt ist. Infolge dieser Lagerung und der Lenkergeometrie sind unter der Einwirkung von Brems- und Antriebskräften die Spurstellung des Hinterrades verändernde Radverlagerungen möglich. Ein willkürliches Lenken der Hinterräder ist mit der bekannten Radaufhängung nicht zu erzielen.

Ein willkürliches Lenken ist bei einer anderen bekannten Radaufhängung für vorderradgetriebene Fahrzeuge möglich, bei der an jedem Hinterrad-Radträger ein Federbein, ein Längslenker und zwei parallel zueinander und mit Abstand voneinander hintereinander angeordnete Querlenker vorhanden sind, von denen der vordere mit seinem äußeren Ende am unteren Ende des Federbeins und mit seinem inneren Ende an der Fahrzeugkarosserie befestigt ist, während der hintere mit seinem äußeren Ende über einen Lenkhebel ebenfalls mit dem unteren Ende des Federbeins und mit seinem inneren Ende mit einer hydraulisch oder elektromotorisch betätigbaren Schubstange verbunden ist (DE-A 35 07 098). Diese bekannte Radaufhängung ist jedoch aufwendig. Bei ihr ist der Fahrzeugaufbau über die Tragefedern der Federbeine abgestützt.

Ein willkürliches Lenken ist auch bei einer weiteren bekannten Radaufhängung für angetriebene Hinterräder von Personenkraftwagen mit Allradlenkung vorgesehen, bei der eine den Fahrzeugaufbau abstützende Tragfeder, die als Schraubenfeder ausgebildet und vor der Radantriebswelle angeordnet ist, radseitig auf einem als Radführungsglied dienenden Schräglenker abgestützt ist, der unter der Radantriebswelle angeordnet, gabelförmig ausgebildet und über ein Lager vor und ein Lager hinter der Radantriebswelle an dem Fahrzeugaufbau elastisch gelagert ist und zum Lenken mittels eines Stellmotors unter Verformung der elastischen Lager in seiner Ebene verschoben werden kann (EP-A 96 345 Fig. 16, 17). Bei dieser bekannten Radaufhängung ist ein Stoßdämpfer als weiteres Radführungsglied vorhanden. Ein kinematisch exaktes Lenken ist wegen der Verformbarkeit der elastischen Lager nicht gewährleistet.

Der Erfindung liegt die Aufgabe zugrunde, eine Radaufhängung der eingangs genannten Art zu schaffen, die unter Beibehaltung der kompakten Aufbaus, der von der an erster Stelle erwähnten bekannten Radaufhängung her bekannt ist, ein willkürliches Lenken der Hinterräder ermöglicht.

Die Lösung dieser Aufgabe ist in dem kennzeichnenden Teil des Patentanspruchs 1 angegeben. Durch sie wird mit einfachen Mitteln erreicht, daß mit einer Radaufhängung, die insgesamt nur einen geringen Bauraum beansprucht und bei der insbesondere der Raum zwischen den Hinterrädern für andere Zwecke, z.B. als Kofferraum, genutzt werden kann, ein exaktes Lenken in dem für das Lenken der Hinterräder begrenzten Maße willkürlich durchgeführt werden kann.

In der Zeichnung sind Ausführungsbeispiele der Erfindung schematisch dargestellt, und zwar zeigt

Fig. 1 eine Radaufhänung in Schrägansicht von oben, links und hinten und
Fig. 2 eine andere Radaufhänung ebenfalls in Schrägansicht von oben, links und hinten.

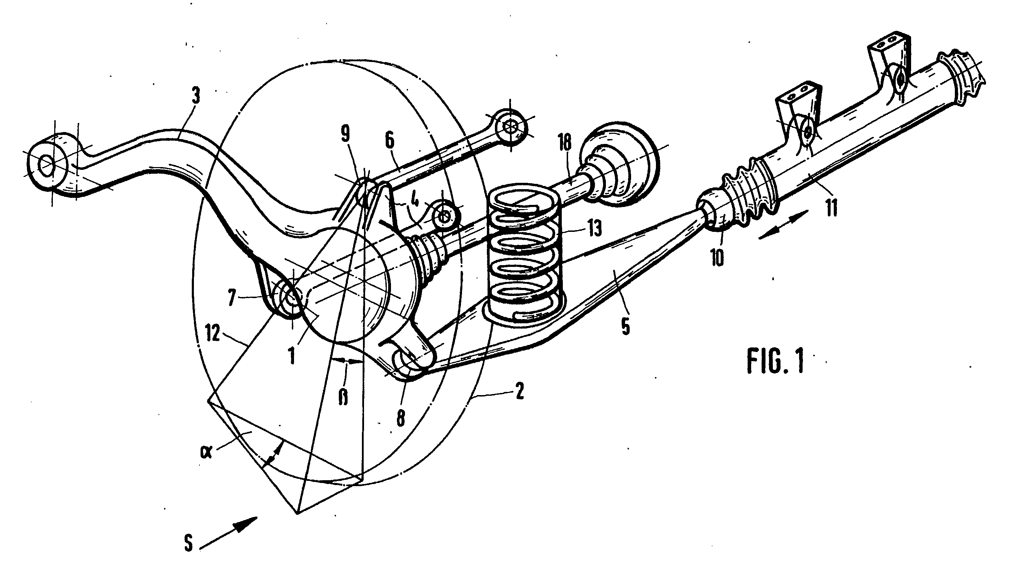

Nach Fig. 1 ist ein Radträger 1 für das linke Hinterrad 2 eines nicht weiter dargestellten Personenkraftwagens, der in üblicher Weise mit einer Vorderradlenkung ausgestattet ist, mit einem Längslenker 3 einstückig ausgebildet, der sich von dem Radträger 1 aus wenigstens annähernd in Fahrzeuglängsrichtung nach vorne erstreckt und an seinem vorderen Ende an dem Fahrzeugaufbau gelagert ist. Radträger 1 und Längslenker 3 bilden gemeinsam, eine Längsschwinge.

An dem Radträger 1 greifen ein vorderer Querlenker 4, ein hinterer Querlenker 5 und ein oberer Querlenker 6, die sich jeweils wenigstens annähernd in Fahrzeugquerrichtung erstrecken, an. Die Querlenker 4, 5, 6 sind jeweils an ihren äußeren Enden über ein vorderes Gelenk 7 bzw. ein hinteres Gelenk 8 bzw. ein oberes Gelenk 9 mit dem Radträger 1 verbunden. In Seitenansicht bilden die drei Gelenke 7, 8, 9 die Ecken eines Dreiecks. Das vordere Gelenk 7 und das hintere Gelenk 8 befinden sich unterhalb und das obere Gelenk 9 befindet sich oberhalb der Radmitte. In lotrechter Projection ist das obere Gelenk 9 zwischen dem vorderen Gelenk 7 und dem hinteren Gelenk 8 angeordnet.

An ihren inneren Enden sind der vordere Querlenker 4 und der obere Querlenker 6 an einem an dem Fahrzeugaufbau elastisch gelagerten Fahrschemel in ihrer Längsrichtung, also in Fahrzeugquerrichtung fixiert gelagert. Das innere Ende des hinteren Querlenkers 5 ist mit dem linken Ende einer Schubstange 10 eines Stellmotors 11 verbunden, der ebenfalls an dem Fahrschemel befestigt ist. Die Schubstange 10, die sich ebenso wie der hintere Querlenker 5 in Fahrzeugquerrichtung erstreckt, ist gemeinsam mit diesem in Fahrzeugquerrichtung verlagerbar.

Das vordere Gelenk 7 und das obere Gelenk 9 der beiden in Fahrzeugquerrichtung fixierten Querlenker 4, 6 definieren eine Lenkdrehachse 12, die nach hinten ansteigt und um welche der Radträger 1 gemeinsam mit dem Längslenker 3 mit Hilfe des hinteren Querlenkers 5 schwenkbar ist. Auf dem hinteren Querlenker 5 stützt sich die linke hintere Tragfeder 13 der den Fahrzeugaufbau tragenden Tragfedern ab. Die Abstützstelle für die Tragfeder 13 ist etwa ein Drittel der Länge des Querlenkers 5 von seinem äußeren Ende, also von dem hinteren Gelenk 8 an dem Radträger 1 entfernt angeordnet. Auch der linke hintere Stoßdämpfer, der mit der Tragfeder 13 eine Baueinheit bilden kann, stützt sich an dem hinteren Querlenker 5 ab, der sich seinerseits an seinem äußeren Ende an dem Radträger 1 und an seinem inneren Ende an der Schubstange 10 abstützt. Eine Radantriebswelle 18 dient dem Antrieb des Hinterrades 2.

Bei einem durch den hinteren Querlenker 5 bewirkten Schwenken des Radträgers 1 um die Lenkdrehachse 12, die durch die Mitten des vorderen Gelenkes 7 und des oberen Gelenkes 9 verläuft, ergibt sich eine Schrägstellung des Hinterrades 2 um den Lenkeinschlagwinkel alpha. Gleichzeitig ergibt sich eine Änderung des Sturzes des Hinterrades 2 um den Sturzänderungswinkel beta. Diese Verlagerung des Hinterrades 2 bewirkt einen raschen Aufbau einer Seitenkraft S, die einen Seitenversatz des Fahrzeugs zur Folge hat.

Wegen des bei der Hinterradlenkung nur geringen Lenkeinschlags sind nur geringe Verlagerungen des Querlenkers 5 erforderlich, so daß sich auch die auf dem Querlenker 5 befindliche Abstützung der Tragfeder 13 beim Lenken nur geringfügig seitlich verlagert.

Das vordere Gelenk 7 und das obere Gelenk 9 sind zweckmäßigerweise so angeordnet, daß die Lenkdrehachse 12 derart verläuft, daß sich für die Vorwärtsfahrtrichtung ein Nachlauf für das Hinterrad 2 ergibt. Die Lenkdrehachse 12 muß nicht in einer sich in Fahrzeuglängsrichtung erstreckenden lotrechten Ebene verlaufen, sie kann vielmehr auch in einer sich in Fahrzeuglängsrichtung erstreckenden geneigten Ebene verlaufen, so daß für die Lenkdrehachse 12 in vorteilhafter Weise eine Spreizung gegeben ist.

Die vordere Lagerung des Längslenkers 3 ist derart ausgebildet, daß sie die Verlagerungen, die das vordere Ende des Längslenkers 3 bei den Schwenkbewegungen um die Lenkdrehachse 12 erfährt, zuläßt.

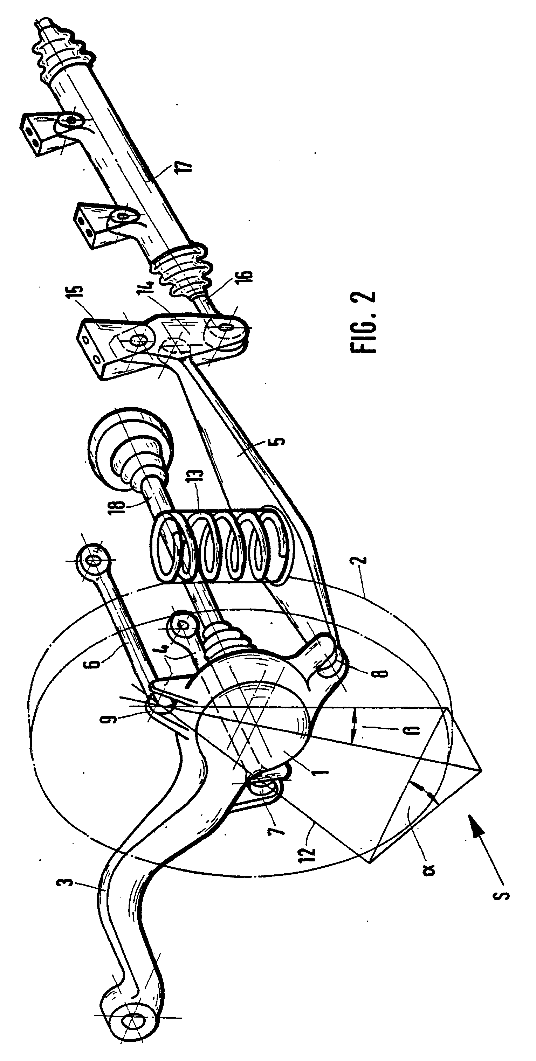

Die Radaufhängung nach Fig. 2 unterscheidet sich von der nach Fig. 1 dadurch, daß das innere Ende des in Fahrzeugquerrichtung verlagerbaren hinteren Querlenkers 5 nicht an einer Schubstange, sondern an einem Zwischenhebel 14 angelenkt ist. Dieser Zwischenhebel 14 ist um eine zumindest annähernd in Fahreuglängsrichtung verlaufende Schwenkachse schwenkbar über ein Zwischenstück 15 an dem nicht dargestellten Fahrschemel gelagert. Außerdem ist der Zwischenhebel 14 mit einer Schubstange 16 eines Stellmotors 17 verbunden. Bei dieser Ausbildung ist die Schubstange anders als die bei der Ausbildung nach Fig. 1 nicht durch die Stützkräfte der Tragfeder 13 belastet.

In Abweichung von den dargestellten Ausführungsbeispielen können die Querträger in der Weise angeordnet sein, daß sich zwei der drei Gelenke oberhalb und das dritte Gelenk unterhalb der Radmitte befinden. Dieses untere Gelenk ist dabei derart angeordnet, daß es in lotrechter Projektion zwischen den beiden oberen Gelenken angeordnet ist. Bei dieser Anordnung wird die Lenkdrehachse durch die an dem Radträger befindlichen Gelenke des hinteren oberen Lenkers und des unteren Lenkers definiert. Der vordere obere Lenker dient dem Lenken und dem Abstützen der Tragfeder. Die nach Fig. 1 und Fig. 2 vorgesehene Anordnung bietet jedoch den Vorteil einer besonders wenig Bauraum beanspruchenden Ausbildung.

Statt an einem Fahrschemel können die Querlenker unmittelbar an dem Fahrzeugaufbau gelagert sein. Außerdem ist es möglich, den Längslenker zweiteilig auszubilden und die beiden Lenkerteile durch ein Querbewegungen zulas sendes Scharniergelenk mit im Wesentlichen parallel zu der Lenkdrehachse verlaufender Achse schwenkbar miteinander zu verbinden. Darüber hinaus ist es ferner möglich, die Längsschwinge in Querrichtung biegbar auszubilden.

Die Tragfeder kann wie bei den Ausführungsbeispielen dargestellt als Schraubenfeder ausgebildet sein. Es können jedoch auch andere Federarten eingesetzt werden. Beispielsweise kann die Tragfeder als Luftfeder ausgebildet sein.

Die rechte Radaufhängung ist zu der vorstehend erläuterten linken Radaufhängung symmetrisch ausgebildet. Eine einfache Ausbildung ergibt sich, wenn eine gemeinsame Schubstange für die beiden auf der linken bzw. rechten Fahrzeugseite vorgesehenen in Fahrzeugquerrichtung verlagerbaren Querlenker vorgesehen ist.

Bezugszeichenliste

1 Radträger
2 linkes Hinterrad
3 Längslenker
4 vorderer Querlenker
5 hinterer Querlenker
6 oberer Querlenker
7 vorderes Gelenk
8 hinteres Gelenk
9 oberes Gelenk
10 Schubstange
11 Stellmotor
12 Lenkdrehachse
13 Tragfeder
14 Zwischenhebel
15 Zwischenstück
16 Schubstange
17 Stellmotor
18 Radantriebswelle
alpha Lenkeinschlagwinkel
beta Sturzänderungswinkel
S Seitenkraft

**Patentansprüche**

1. Radaufhängung für Hinterräder von mit Vorderradlenkung ausgestatteten Kraftfahrzeugen, insbesondere Personenkraftwagen, mit einem Radträger für jedes Hinterrad, der über Radführungsglieder mit dem Fahrzeugaufbau od.dgl. verbunden ist, von denen zumindest drei als sich wenigstens annähernd in Fahrzeugquerrichtung erstreckende Querlenker ausgebildet sind, für deren Gelenke, über welche sie mit dem Radträger verbunden sind, eine Dreiecksanordnung vorgesehen ist, bei der sich zwei Gelenke unterhalb und das dritte Gelenk oberhalb der Radmitte bzw. zwei Gelenke oberhalb und das dritte Gelenk unterhalb der Radmitte befinden, und mit einer den Fahrzeugaufbau abstützenden Tragfeder für jedes Hinterrad, die radseitig an einem der Querlenker abgestützt ist,
**dadurch gekennzeichnet,**
daß bei einer Anordnung mit zwei unteren Querlenkern (4, 5) der hintere (5) und bei einer Anordnung mit zwei oberen Querlenkern der vordere die Tragfeder (13) abstützt und der abstützende Querlenker (5) zur begrenzten Lenkung der Hinterräder (2) an seinem inneren Ende mit einer Schubstange (10, 16), die mit einem Stellmotor (11, 17) in Wirkverbindung steht, verbunden und durch den Stellmotor (11, 17) in Fahrzeugquerrichtung verlagerbar ist.

2. Radaufhängung nach Anspruch 1, dadurch gekennzeichnet, daß das dritte der drei radträgerseitigen Gelenke (9) in lotrechter Projektion zwischen den beiden anderen radträgerseitigen Gelenken (7, 8) angeordnet ist.

3. Radaufhängung nach einem der Ansprüche 1 oder 2, dadurch gekennzeichnet, daß die Tragfeder (13) als Schraubenfeder ausgebildet ist.

4. Radaufhängung nach einem der Ansprüche 1 bis 3, dadurch gekennzeichnet, daß zwischen dem in Fahrzeugquerrichtung verlagerbaren Querlenker (5) und dem Fahrzeugaufbau auch ein Stoßdämpfer angeordnet ist.

5. Radaufhängung nach einem der Ansprüche 1 bis 4, dadurch gekennzeichnet, daß der in Fahrzeugquerrichtung verlagerbare Querlenker (5) an seinem inneren Ende mit der Schubstange (10) unmittelbar verbunden ist.

6. Radaufhängung nach einem der Ansprüche 1 bis 4, dadurch gekennzeichnet, daß der in Fahrzeugquerrichtung verlagerbare Querlenker (5) mit seinem inneren Ende an einem Zwischenhebel (14) angelenkt ist, der um eine zumindest annähernd in Fahrzeuglängsrichtung verlaufende Schwenkachse schwenkbar an dem Fahrzeugaufbau od.dgl. gelagert und mit der Schubstange (16) verbunden ist.

7. Radaufhängung nach Anspruch 5 oder 6, dadurch gekennzeichnet, daß die in Fahrzeugquerrichtung verlagerbaren Querlenker (5) beider Fahrzeugseiten mit einer gemeinsamen Schubstange (10, 16) verbunden sind.

## Claims

1. A suspension for rear wheels of motor vehicles equipped with front wheel steering, especially passenger motor vehicles, having a wheel carrier for each rear wheel, which carrier is connected through wheel guide members with the vehicle body or the like, of which members at least three are formed as transverse links extending at least approximately in the transverse direction for the joints of which, by which they are connected with the wheel carrier, a triangle arrangement is provided, in which two joints are situated below and the third joint above the wheel centre or two joints above and the third joint beneath the wheel centre, and having a carrier spring supporting the vehicle body for each rear wheel, which spring is supported on the wheel side on one of the transverse links, characterised in that, in the case of an arrangement with two lower transverse links (4, 5), the rear one (5), and in the case of an arrangement with two upper transverse links, the forward one, supports the carrier spring (13), and the supporting transverse link (5) is connected, for limited steering of the rear wheels (2), at its inner end with a push rod (10, 16) which is in operative connection with a servo-motor (11, 17) and is displaceable in the transverse direction of the vehicle by the servo-motor (11, 17).

2. A wheel suspension according to Claim 1, characterised in that the third of the three joints (9) on the wheel carrier side is arranged in a vertical projection between the other two joints (7, 8) on the wheel carrier side.

3. A wheel suspension according to either one of Claims 1 or 2, characterised in that the carrier spring (13) is formed as a helical spring.

4. A wheel suspension according to any one of Claims 1 to 3, characterised in that a shock absorber is also arranged between the transverse link (5), which is shiftable in the transverse direction of the vehicle, and the vehicle body.

5. A wheel suspension according to any one of Claims 1 to 4, characterised in that the transverse link (5), which is shiftable in the transverse direction of the vehicle, is directly connected at its inner end with the push rod (10).

6. A wheel suspension according to any one of Claims 1 to 4, characterised in that the transverse link (5), which is shiftable in the transverse direction of the vehicle, is articulated with its inner end to an intermediate lever (14) which is mounted on the vehicle body or the like pivotably about a pivot axis extending at least approximately in the longitudinal direction of the vehicle and is connected with the push rod (16).

7. A wheel suspension according to Claim 5 or 6, characterised in that the transverse links (5), shiftable in the transverse direction of the vehicle, of both vehicle sides are connected with a common push rod (10, 16).

## Revendications

1. Suspension de roues arrière de véhicules automobiles à roues directrices avant, en particulier pour voitures avec un support de roue pour chaque roue arrière, qui est relié par des organes de guidage de roue au châssis du véhicule ou analogue, dont au moins trois leviers transversaux s'étendant dans la direction approximativement transversale du véhicule, pour leurs articulations, par lesquelles il sont reliés au support de roue, est prévue une disposition en triangle, dans laquelle deux articulations se trouvent en dessous du milieu de la roue et la troisième au-dessus, ou bien deux articulations au-dessus et la troisième en-dessous du milieu de la roue, et avec un ressort porteur s'appuyant sur le châssis pour chaque roue arrière, qui s'appuie du côté de la roue sur un levier transversal, caractérisé en ce que: dans une disposition avec deux leviers transversaux inférieurs (4, 5) le levier arrière (5), et dans une disposition avec deux leviers transversaux supérieurs, le levier avant, supporte le ressort porteur (13) et le levier transversal supportant (5), pour braquer de manière limitée les roues arrière (2) est relié par son extrémité interne à une jambe de force (10, 16) qui coopère avec un moteur de réglage, et qui est déplaçable par le moteur de réglage (11, 17) dans le sens transversal du véhicule.

2. Suspension de roue selon la revendication 1, caractérisée en ce que la troisième des trois articulations du côté du support de roue (9) est disposée en projection verticale entre les deux autres articulations du côté du support de roue (7, 8).

3. Suspension de roue selon l'une des revendications 1 ou 2, caractérisée en ce que le ressort porteur (13) est en forme de ressort hélicoïdal.

4. Suspension de roue selon l'une des revendications 1 à 3, caractérisée en ce que entre le levier transversal (5) déplaçable dans le sens transversal par rapport au véhicule et le châssis du véhicule on place aussi un amortisseur.

5. Suspension de roue selon l'une des revendications 1 à 4, caractérisée en ce que le levier transversal (5) déplaçable dans le sens transversal par rapport au véhicule est relié à son extrémité interne directement à la jambe de force (10).

6. Suspension de roue selon l'une des revendications 1 à 4, caractérisée en ce que le levier transversal (5) déplaçable dans le sens transversal par rapport au véhicule est articulé par son extrémité interne sur un levier intermédiaire (14) qui peut pivoter au moins autour d'un axe s'étendant approximativement dans le sens longitudinal du véhicule et s'appuie sur le châssis du véhicule ou analogue et qui est relié à la jambe de force (16).

7. Suspension selon la revendication 5 ou 6, caractérisée en ce que les leviers transversaux (5) déplaçables dans le sens transversal par rapport au véhicule (5) des deux côtés du véhicule sont reliés à une jambe de force commune (10, 16).

FIG.1

FIG. 2

EP 0 277 650 B1